# EUROPEAN PATENT APPLICATION

(11) **EP 3 683 480 A1**
(43) Date of publication of application: **22.07.2020**
(21) Application number: 19170368.5
(22) Date of filing: 19.04.2019
(51) Int. Cl.: F16L 11/08

(54) **GARDEN HOSE**

(30) Priority: 17.01.2019 TW 108101845
(71) Applicant: Newbud Industrial Corp., Chang Hua Hsien (TW)
(72) Inventor: Liang, Tsang-Fu, CHANG HUA HSIEN (TW)
(74) Representative: Lang, Christian

(57) **Abstract**

A garden hose is revealed. The garden hose consists of an inner tube and a braided outer tube tightly sheathing the outer diameter of the inner tube. The inner tube and the braided outer tube of the garden hose are combined with each other integrally using an adhesive und pressure, so that the inner tube can be surely adhered to the inner diameter of the braided outer tube. Therefore, in use of the garden hose, the inner tube will not wind and come loose from the braided outer tube, avoiding a kinking of the inner tube in the braided outer tube und a narrowing and clogging of the passageway. Thereby, a certain straightness between the braided outer tube and the inner tube can be assured and the assured straightness contributes to a free water flowing. On the other hand, the braided outer tube is soaked in the adhesive, so that the strings are adhered to each other, avoiding breakages and of the strings of the braided outer tube and assuring a reliable protection of the inner tube and a long operating life of the garden hose.

## Description

### Field of the Invention

The present invention relates to a garden hose, especially to a garden hose which is resistant to kinks, clogging, scratching und cracking.

### Description of Related Art

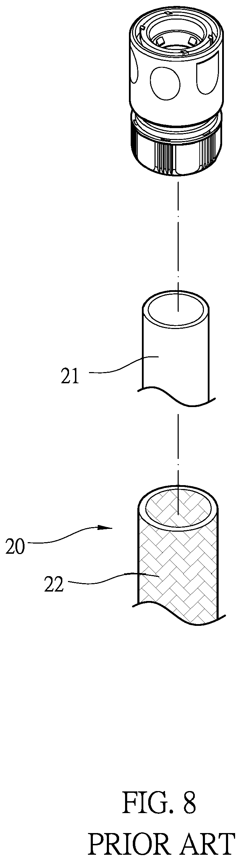

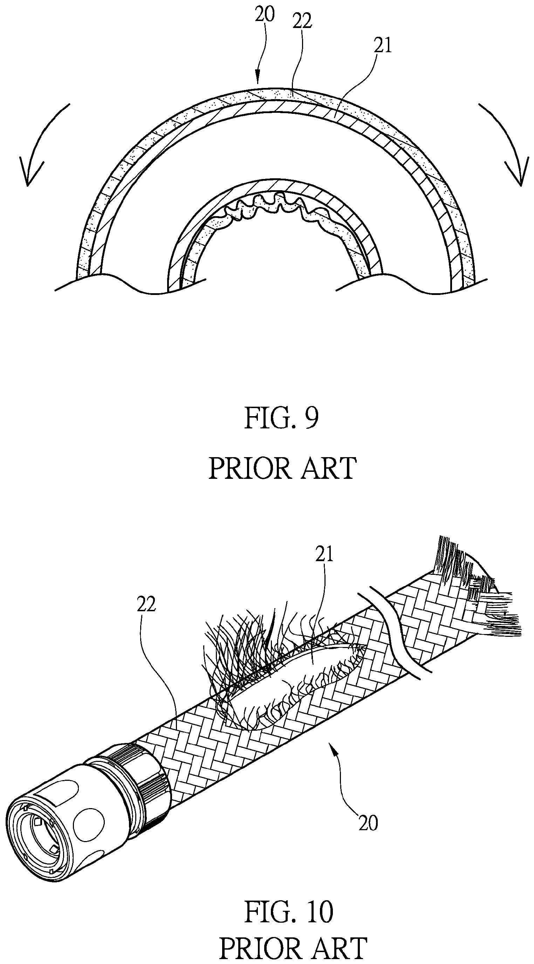

A conventional garden hose is shown in Fig. 8, Fig. 9, Fig. 10 and Fig. 11. The garden hose 20 includes a flexible inner tube 21 and a braided outer tube 22 sheathing the flexible inner tube 21. Thus, the flexible inner tube 21 is protected by the braided outer tube 22 from weathering and aging. Since the braided outer tube 22 is not flexible, the pressure by means of which the flexible inner tube 21 is expanded is restricted and the flexible inner tube 21 is protected from abrasion or cuts. Thus, a long operating life of the garden hose 20 can be achieved.

However, the braided outer tube 22 of the garden hose 20 is not sheathing the flexible inner tube 21 tightly, which enhances the tendency of the flexible inner tube 21 to kink inside the braided outer tube 22. If the flexible inner tube 21 is kinked for a long time, it is not possible to restore the flexibility of the inner tube 21. This may result in a reduction of the tube diameter and a clogging of the flexible inner tube 21. Moreover, the inner diameter of the braided outer tube 22 doesn't abut against the outer diameter of the flexible inner tube 21, so that the braided outer tube 22 will not bend and deform with the flexible inner tube 21. Thus, it is difficult to find out deformities and clogging of the flexible inner tube 21 immediately. This may hinder the water flow and reduce the flow amount of the garden hose 20 significantly.

Besides, the sheathing state between the braided outer tube 22 and the flexible inner tube 21 is rather loose. If the braided outer tube 22 is exposed to abrasion for a long time or cut by sharp objects, the braiding strings of the braided outer tube 22 will be cut apart und become loose. Thereby, the flexible inner tube 21 is exposed and unprotected. This will result in a shortening of the operating life of the garden hose.

On the other hand, the braided outer tube 22 is made of fiber bundles of textile yarns. If the garden hose is towed on the ground in use, soil, sand and sandstones adhere easily to the uneven surfaces of the fibers, so that the garden hose will be soiled and the dirt is not easy to be cleaned. As a result of the abrasion of the braided outer tube 22 by sandstones, sandstones may hook in the textile yarn and the strings come loose. When the braided outer tube 22 gets in touch with water, the capillary pores of the fibers will soak and contain water. The moistened braided outer tube 22 doesn't dry quickly. Thus, when the garden hose 20 is stowed in a not-dry state, the surface of the braided outer tube 22 may mildew, stink or decay because of the increase of bacteria. So it takes a long time till the braided outer tube 22 is dry.

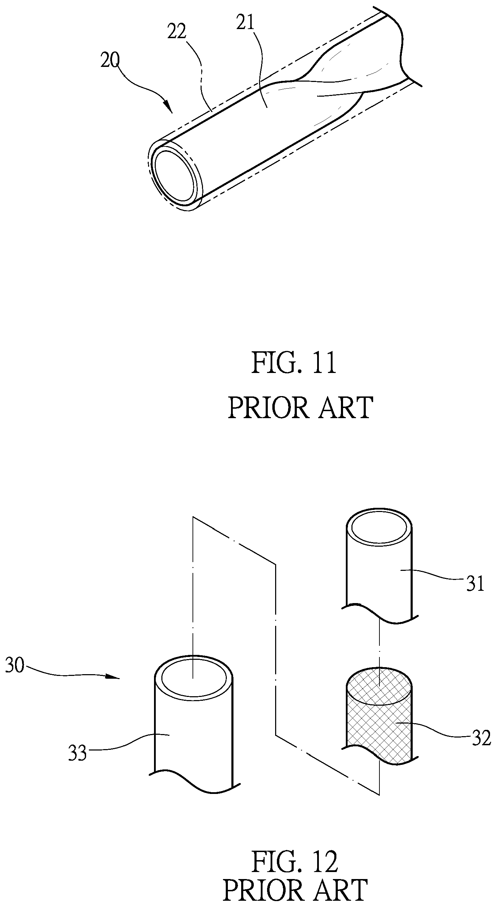

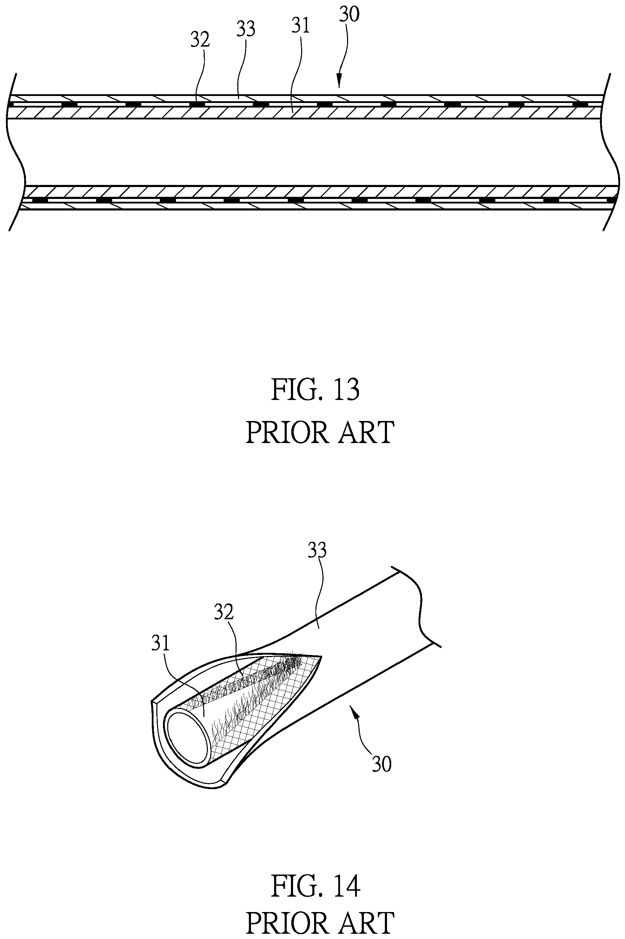

Another conventional garden hose is shown in Fig. 12, Fig. 13 and Fig. 14. The garden hose 30 includes an inner tube 31, a braided layer 32 sheathing the inner tube 31 and a outer tube 33 sheathing the braided layer 32. The braided layer 32 is arranged for limiting the expansion of the inner tube 31, in order to protect the inner tube 31 from kinking and deformation. Furthermore, the outer tube 33 is pressed so as to sheathe the braided layer 32 in the way that the braided layer 32 can surely abut upon the outer diameter of the inner tube 31. At the same time, the braided layer 32 is protected by the outer tube 33 from cuts by sharp objects.

Indeed, the garden hose 30 is resistant to kinks, winding and clogging. However, the sheathing of the braided layer 32 with the outer tube 33 requires a lot of efforts and the size of the meshes of the braided layer 32 will influence the connection between the inner tube 31 and the outer tube 33. Indeed, a garden hose 30 with meshes of a comparatively smaller density can be constructively strengthened, but has an increased thickness and an increased weight. This will make the rolling-up and storage of the garden hose more difficult. On the contrary, a garden hose 30 with meshes of a comparatively bigger density can be enhanced at the connection between the inner tube 31 and the outer tube 33, but also gives up the constructive strength of sheathing the inner tube 31. Thus, an optimal constructive assembly can be hardly achieved. As a result, the costs for labor and materials will increase und the economical benefits will decrease. Moreover, if the garden hose 30 is cut by sharp objects, the strings of the braided layer 32 will be cut apart and thus loosen. Thereby, the flexible inner tube 21 will be exposed and unprotected which leads to a shortening of the operating life of the garden hose.

### SUMMARY OF THE INVENTION

Therefore it is a primary object of the present invention to provide a garden hose which is resistant to kinks, clogging, scratching and cracking.

In order to achieve the above object, a garden hose according to the present invention consists of an inner tube and a braided outer tube tightly sheathing the outer diameter of the inner tube. An adhesive layer is formed between the inner tube and the braided outer tube after the garden hose has been soaked in an adhesive. As soon as the garden hose is dry, a scratch-proof layer is further formed on the outer surface of the braided outer tube owing to the hardening of the adhesive.

Preferably, a hose coupling is further put on an end portion of the garden hose. The hose coupling is further provided with a tube clamp which is sheathing the braided outer tube.

Preferably, the braided outer tube is braided with a rope braiding machine having bobbins so as to cover the outer diameter of the inner tube.

Preferably, the adhesive is a water-proof resin.

Preferably, the garden hose is rolled with a plurality of rollers, enabling the braided outer tube to abut upon the outer diameter of the inner tube tightly.

Preferably, the braided outer tube is pressed so as to abut upon the diameter of the inner tube.

Preferably, the inner tube is a plastic tube.

Preferably, the inner tube is a rubber tube.

Compared to the conventional garden hoses, the garden hose according to the invention has following advantages. The garden hose is connected to a water supply end for supplying water. The inner tube and the braided outer tube of the garden hose are combined with each other integrally using the adhesive und pressure, so that the inner tube can be surely adhered to the inner diameter of the braided outer tube. This can be achieved at low cost. Therefore, in use of the garden hose, the inner tube will not wind and come loose from the braided outer tube, avoiding a kinking of the inner tube in the braided outer tube und a narrowing and clogging of the passageway. Thereby, a certain straightness between the braided outer tube and the inner tube can be assured and the assured straightness contributes to a free water flowing. On the other hand, the braided outer tube is soaked in the adhesive, so that the strings are adhered to each other, filling up the capillary pores formed on the surface of the braided outer tube. This allows for the garden hose which has a comparatively lower weight. Furthermore, a hard scratch-proof layer is formed on the surface of the braided outer tube and the abrasion- and pressure-resistance of the garden hose is thus increased. When the garden hose according the present invention is towed on the ground or cut apart by sharp objects, the problems with the conventional garden hoses, i.e. sandstones, for example, may hook in the textile yarn and the strings come loose or are cut apart, will be avoided owing to the scratch-proof layer. Thereby, a high durability of the braided outer tube can be assured, so that the inner tube can be protected from damages well. Furthermore, the scratch-proof layer can prevent the braided outer tube from soaking water, avoiding an ingress of dirty water in the braided outer tube. By doing this, the garden hose is resistant to dirt and bacteria and can prevent a bacterial growth. After use, the surface of the garden hose can be cleaned easily and no waiting time for drying and standing still is needed. So the garden hose can be rolled-up and stowed shortly after the use and is more durable.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of a garden hose according to the present invention;
Fig. 2 is an explosive view of the garden hose shown in Fig. 1;
Fig. 3 is a schematic drawing showing the soaking of a garden hose according to the present invention in an adhesive;
Fig. 4 is a sectional view of a garden hose according to the present invention;
Fig. 5 is a schematic drawing showing a partial length of a garden hose according to the present invention, with the hose being in a kinked state;
Fig. 6 is a schematic drawing showing the cutting into a garden hose according to the present invention with a sharp object;
Fig. 7 is a schematic drawing showing the garden hose shown in Fig. 6 whose braided outer tube is not spread out after being cut;
Fig. 8 is an explosive view of a conventional garden hose;
Fig. 9 is a schematic drawing showing a partial length of a conventional garden hose, with the hose being in a kinked state;
Fig. 10 is a schematic drawing showing the garden hose shown in Fig. 8, with the strings of the braided out tube being cut apart by a sharp object;
Fig. 11 is a schematic drawing showing a partial length of a conventional garden hose, with the flexible inner tube being kinked and clogged;
Fig. 12 is an explosive view of another conventional garden hose;
Fig. 13 is a sectional view of the garden hose shown in Fig. 12;
Fig. 14 is a schematic drawing showing the garden hose shown in Fig. 12, with the braided layer being cut apart by a sharp object.

### DETAILED DESCRIPTION OF THE PREFERRED EMBODIMENT

In order to learn features and functions of the present invention, please refer to the following embodiment and the figures.

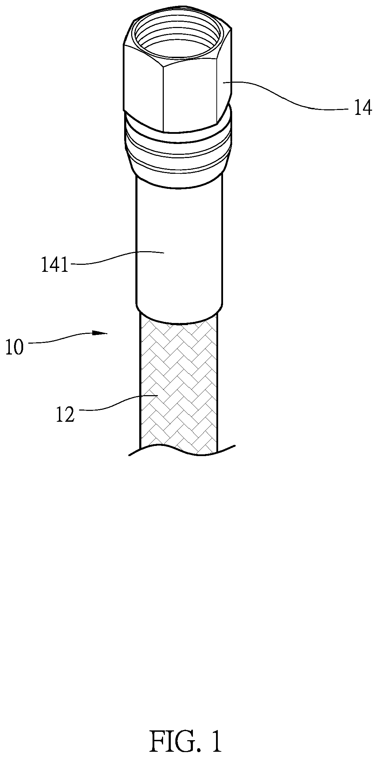

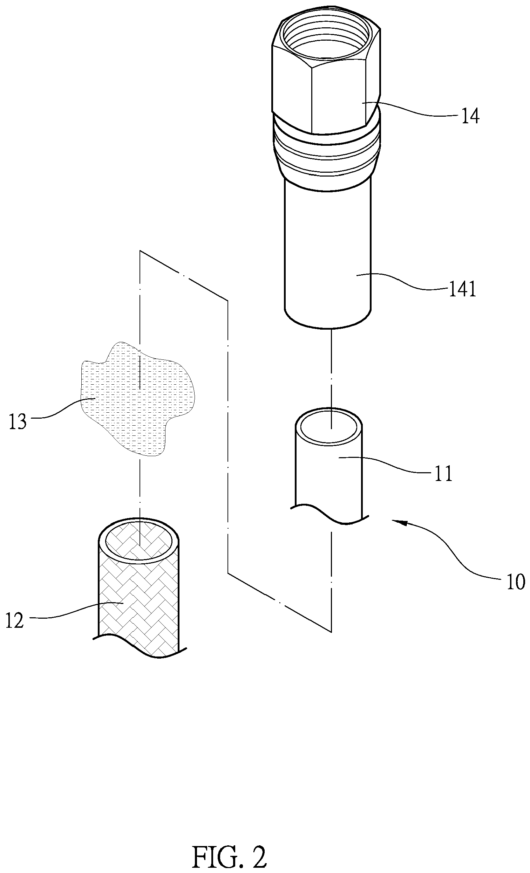

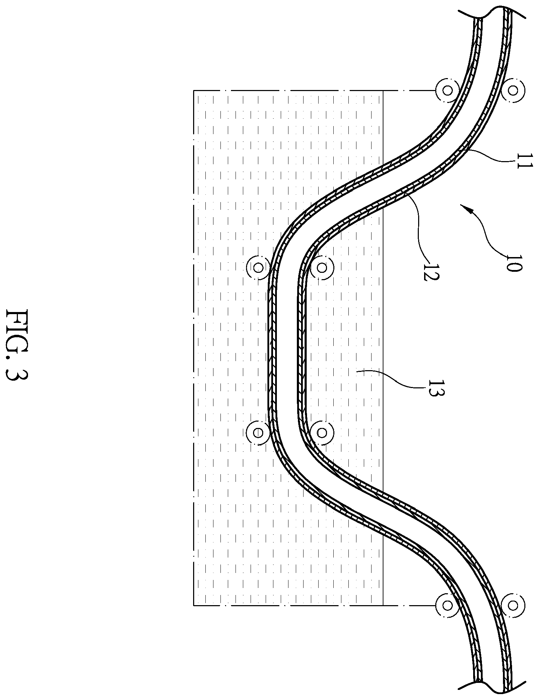

Refer to Fig. 1 to Fig. 4, a garden hose according to the present invention consists of a inner tube 11 and a braided outer tube 12 sheathing tightly the outer diameter of the inner tube 11. The inner tube 11 is a plastic or rubber tube. The braided outer tube 12 is braided with a rope braiding machine having bobbins so as to cover the outer diameter of the inner tube 11. Next, the garden hose 10 is soaked in an adhesive 13 of a water-proof resin so as to form an adhesive layer 131 between the inner tube 11 and the braided outer tube 12. At the same time, the garden hose is rolled with a plurality of rollers, whereas the braided outer tube 12 is rolled to abut upon the diameter of the inner tube 11. As soon as the garden hose 10 is dry after standing still for a certain time, a transparent and hard scratch-proof layer 132 is formed on the outer surface of the braided outer tube 12 owing to the hardening of the adhesive. A hose coupling 14 is further put on an end portion of the garden hose 10. The hose coupling 14 is further provided with a tube clamp 141 which is sheathing the braided outer tube 12.

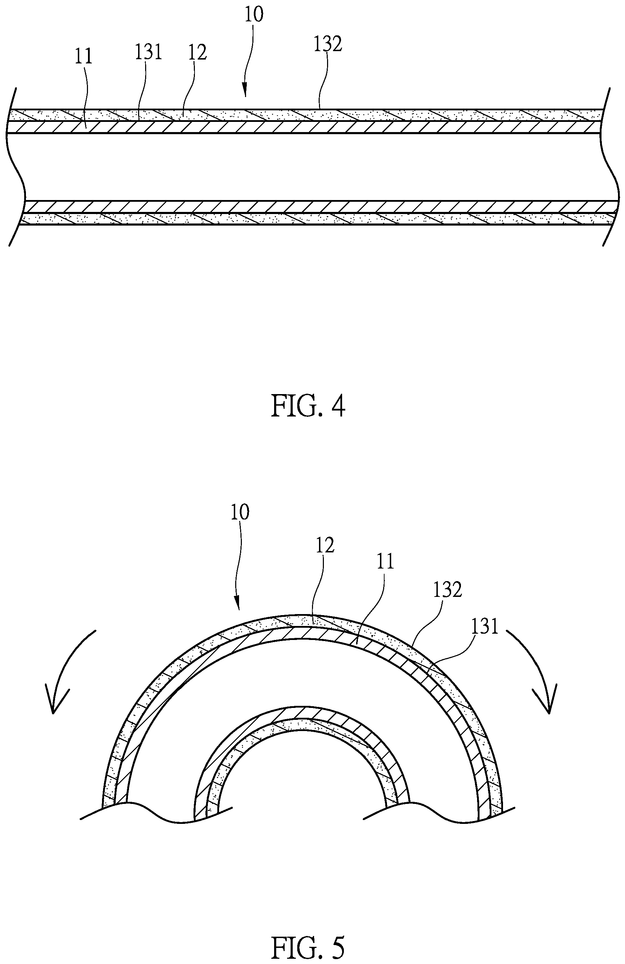

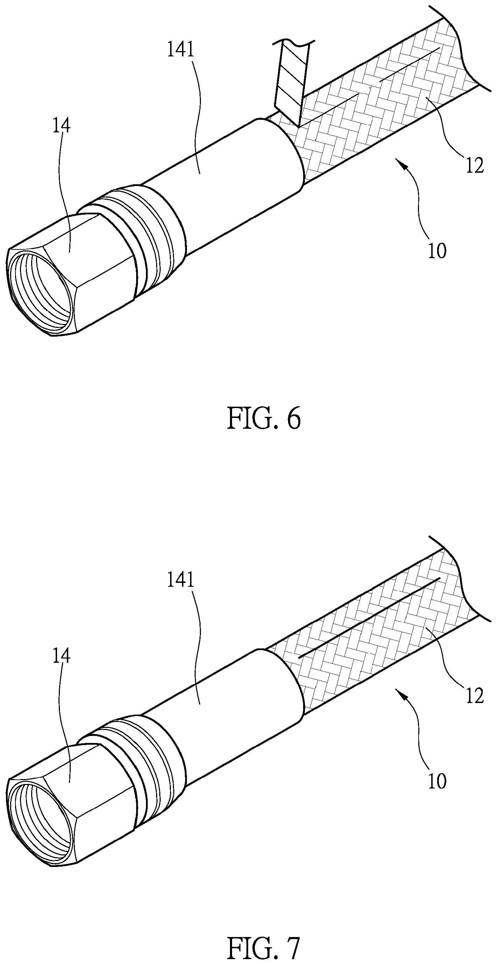

For the use and the benefits of the garden hose according to the present invention, please refer to Fig. 4 to Fig. 7. The garden hose 10 is connected to a water supply end for supplying water. The inner tube 11 and the braided outer tube 12 of the garden hose 10 are combined with each other integrally using the adhesive 13 und pressure, so that the inner tube 11 can be surely adhered to the inner diameter of the braided outer tube 12. This can be achieved at low cost. Therefore, in use of the garden hose 10, the inner tube 11 will not wind and come loose from the braided outer tube 12, avoiding a kinking of the inner tube 11 in the braided outer tube 12 und a narrowing and clogging of the passageway. Thereby, a certain straightness between the braided outer tube 12 and the inner tube 11 can be assured and the assured straightness contributes to a free water flowing. On the other hand, the braided outer tube 12 is soaked in the adhesive 13, so that the strings are adhered to each other, filling up the capillary pores formed on the surface of the braided outer tube 12. This allows for the garden hose 10 which has a comparatively lower weight. Furthermore, a hard scratch-proof layer 132 is formed on the surface of the braided outer tube 12 and the abrasion- and pressure-resistance of the garden hose 10 is thus increased. When the garden hose 10 according the present invention is towed on the ground or cut apart by sharp objects, the problems with the conventional garden hoses, i.e. sandstones, for example, may hook in the textile yarn and the strings come loose or are cut apart, will be avoided owing to the scratch-proof layer 132 Thereby, a high durability of the braided outer tube 12 can be assured, so that the inner tube 11 can be protected from damages well. Furthermore, the scratch-proof layer 132 can prevent the braided outer tube 12 from soaking water, avoiding an ingress of dirty water in the braided outer tube 12. By doing this, the garden hose 10 is resistant to dirt and bacteria and can prevent a bacterial growth. After use, the surface of the garden hose 10 can be cleaned easily and no waiting time for drying and standing still is needed. So the garden hose 10 can be rolled-up and stowed shortly after the use and is more durable.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A garden hose consisting of an inner tube and a braided outer tube tightly sheathing the outer diameter of the inner tube, an adhesive layer being formed between the inner tube and the braided outer tube after the garden hose has been soaked in an adhesive, and a scratch-proof layer further being formed on the outer surface of the braided outer tube owing to the hardening of the adhesive, as soon as the garden hose is dry.

2. The garden hose as claimed in claim 1, wherein a hose coupling is further put on an end portion of the garden hose. The hose coupling is further provided with a tube clamp which is sheathing the braided outer tube.

3. The garden hose as claimed in claim 1, wherein the braided outer tube is braided with a rope braiding machine having bobbins so as to cover the outer diameter of the inner tube.

4. The garden hose as claimed in claim 1, wherein the adhesive is a water-proof resin.

5. The garden hose as claimed in claim 1, wherein the garden hose is rolled with a plurality of rollers, enabling the braided outer tube to abut upon the outer diameter of the inner tube tightly..

6. The garden hose as claimed in claim 1, wherein the braided outer tube abuts upon the outer diameter of the inner tube tightly by being pressed.

7. The garden hose as claimed in claim 1, wherein the inner tube is a plastic tube.

8. The garden hose as claimed in claim 1, wherein the inner tube is a rubber tube.
